Europäisches Patentamt

European Patent Office

Office européen des brevets

(19)

(11) Veröffentlichungsnummer: **0 219 786 B1**

# (12) EUROPÄISCHE PATENTSCHRIFT

(45) Veröffentlichungstag der Patentschrift: **18.12.91**

(51) Int. Cl.⁵: **F16F 13/00, B60K 5/12**

(21) Anmeldenummer: **86114133.1**

(22) Anmeldetag: **13.10.86**

(54) Zweikammer-Stützlager mit hydraulischer Dämpfung.

(30) Priorität: **24.10.85 DE 3537865**

(43) Veröffentlichungstag der Anmeldung:
**29.04.87 Patentblatt 87/18**

(45) Bekanntmachung des Hinweises auf die
Patenterteilung:
**18.12.91 Patentblatt 91/51**

(84) Benannte Vertragsstaaten:
**ES FR GB IT SE**

(56) Entgegenhaltungen:
**EP-A- 0 012 638      EP-A- 0 014 742
EP-A- 0 110 195      EP-A- 0 155 646
DE-A- 2 906 282      DE-A- 2 948 408**

(73) Patentinhaber: **LEMFOERDER METALLWAREN
AG.
Postfach 1220
W-2844 Lemförde(DE)**

(72) Erfinder: **Jördens, Ernst-Günter
Geranienweg 29
W-2845 Damme(DE)**
Erfinder: **Sprute, Johannes
Hegerstrasse 24
W-4500 Osnabrück(DE)**

(74) Vertreter: **Bruse, Willy Hans Heinrich
Edisonstrasse 14
W-2800 Bremen 33(DE)**

EP 0 219 786 B1

## Beschreibung

Die Erfindung betrifft ein Zweikammer-Motorstützlager mit hydraulischer Dämpfung nach dem Oberbegriff des Patentanspruches 1 für die Verwendung in Kraftfahrzeugen.

Die EP-A-0 012 638 beschreibt ein Zweikammer-Motorstützlager mit diesen Gattungsmerkmalen. Das obere Tragelement dient zur Befestigung am Gehäuse des Motors, und das untere Tragelement dient zur Befestigung auf einem Fundament, zum Beispiel der Karosserie eines Kraftfahrzeuges. Der einstückig mit der Membranwandung der äußeren Kammer ausgebildete Federkörper ist als Gummimetallteil einerseits mit dem unteren Tragelement und andererseits mit dem oberen Tragelement fest verbunden. In Abweichung davon ist in der DE-A-29 06 282 ein Zweikammer-Motorstützlager offenbart, bei dem der Federkörper kegelstumpfförmig ausgebildet ist und am oberen Tragelement einen Flanschrand mit einer Anbindungsfläche für einen Randbereich der Membranwandung der äußeren Kammer aufweist, jedoch sind bei dieser bekannten Ausbildung der Federkörper und die Membranwandung als voneinander getrennte Bauteile hergestellt, so daß auch der andere Randbereich der Membranwandung am unteren Tragelement gesondert befestigt ist. Die Verbindung der innenliegenden Arbeitskammer mit der diese außen ringförmig umgebenden Ausgleichskammer wird im Falle der EP-A-0 012 638 durch einen Kanal im Gummikörper und im Falle der DE-A-29 06 282 durch einen Kanal im unteren Tragelement gebildet.

Aus der US-A-4,262,886 ist ein Motorlager bekannt, bei dem eine Arbeitskammer und zwei einander diametral gegenüberliegende Ausgleichskammern, die mit der ersteren durch Kanäle verbunden sind, in einem gemeinsamen Körper aus elastomerem Werkstoff als Vertiefungen ausgebildet und durch ein oberes Tragelement aus festem Werkstoff abgeschlossen sind. Dieses Motorlager einfacher Bauart erfüllt die an ein Motorlager mit den Gattungsmerkmalen zu stellenden Anforderungen nicht.

Aufgabe der Erfindung ist es, ein Zweikammer-Motorstützlager der eingangs genannten Gattung in der Weise weiterzubilden, daß vor allem die Herstellung der Bauteile aus elastomerem Werkstoff weiter vereinfacht, die Montage des Stützlagers erleichtert und die Dämpfungscharakteristik verfeinert werden.

Diese Aufgabe löst die Erfindung durch Ausbildungsmerkmale nach dem Kennzeichen des Patentanspruches 1.

Der Drosselkanal zwischen den beiden Kammern ist somit durch den Stützring gebildet, kann exakt definiert werden und erleichtert den Einbau einer Drossel. Der Stützring ist mit dem gummielastischen Federkörper am Rande der die innere Kammer umschließenden Wand durch Vulkanisation und mit dem unteren Tragelement zum Beispiel durch Schrauben dicht verbindbar, wobei dieses Bauteil die offene Seite des in dem Stützring ausgeformten Drosselkanals abdeckt. Der Federkörper ist mit dem schürzenartigen, die Membranwandung der äußeren ringförmigen Kammer bildenden Ansatz in einem Arbeitsgang, jedoch mit voneinander abweichenden Härtegraden, als hülsenförmiger Körper herstellbar und mit dem oberen Tragelement sowie dem Stützring durch Vulkanisation fest verbunden. Die gummielastische Membranwandung der äußeren Kammer ist somit als schürzenartiger Ansatz gestaltet, dessen unterer Rand durch Haltemittel mit dem unteren Tragelement dicht verbindbar ist. Dieser Rand der äußeren gummielastischen Wandung findet als Dichtung zwischen dem Stützring und dem Tragelement Verwendung.

Ausführungsbeispiele der Erfindung sind auf der Zeichnung dargestellt, die nunmehr im Zusammenhang mit weiteren Einzelheiten der Erfindung erläutert werden. Es zeigen:

Figur 1
einen vertikalen Schnitt durch ein Zweikammer-Motorstützlager,
Figur 2
den gleichen Schnitt durch eine abgeänderte Ausführungsform,
Figuren 3 und 4
Varianten der Befestigung des Federkörpers am Stützring sowie dessen Gestaltung und Verbindung mit dem unteren Tragelement.

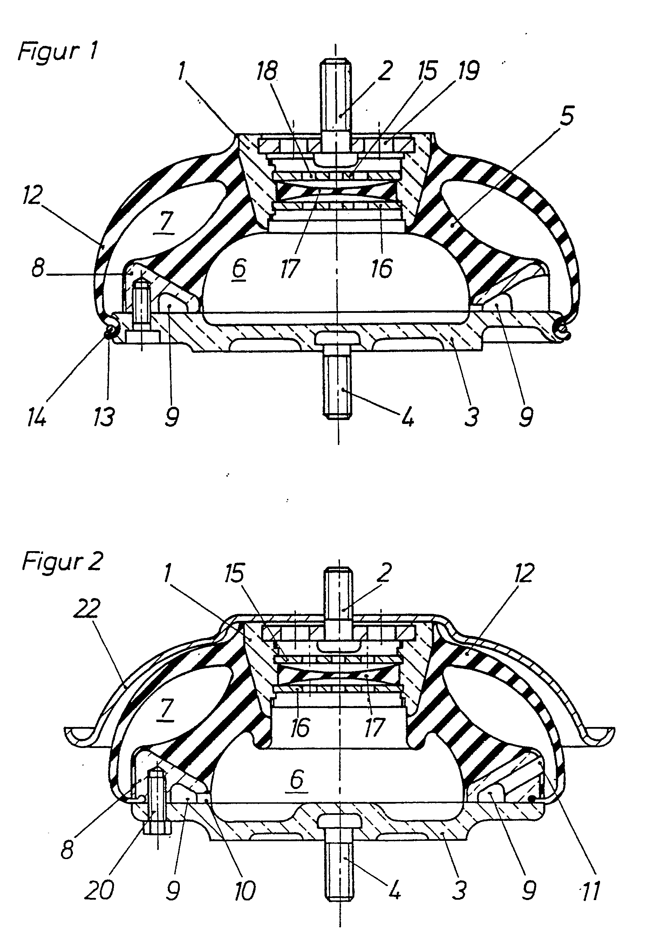

Das Zweikammer-Motorstützlager besteht aus dem oberen Tragelement 1 mit Mitteln 2 zur Befestigung am Gehäuse eines Motors oder dergleichen, dem unteren Tragelement 3 mit Mitteln 4 zur Befestigung auf einem Fundament, z.B. der Karosserie eines Kraftfahrzeuges, und dem Federkörper 5 aus Gummi oder einem anderen elastischen Werkstoff mit vergleichbaren Eigenschaften. Diese Bauteile schließen eine innere Kammer 6 und eine äußere Kammer 7 ein, die die innere Kammer 6 ringförmig umgibt. Mit dem unteren Tragelement 3 ist ein Stützring 8 verbindbar, der zusammen mit dem Tragelement 3 einen ringförmigen Drosselkanal 9 einschließt, der in dem Stützring 8 ausgeformt und dessen offene Seite durch das untere Tragelement 3 abgedeckt ist. Die Mündung 10 des Drosselkanals 9 in die innere Kammer 6 ist etwa horizontal und die Mündung 11 in die äußere Kammer 7 ist etwa vertikal, mindestens jedoch aufwärts gerichtet (Figur 2). In den Drosselkanal 9 ist an beliebiger Stelle ein Sperrglied einsetzbar, welches den Kanalquerschnitt ganz oder teilweise absperrt, so daß die Länge des Drosselkanals zwischen der Mündung 10 und der Mündung 11 bestimmbar ist. Der Federkörper 5 ist am oberen Ende mit einem schürzenförmig gestalteten Ansatz 12 versehen, der die Membranwandung der äußeren Kammer 7 bildet, die zwischen diesem schürzenförmigen Ansatz 12 und dem eigentlichen Federkörper 5 eingeschlossen ist. Der untere Rand 13 dieses schürzenförmigen Ansatzes 12 ist mit dem unteren Tragelement 3 dicht und fest verbindbar. Beispielhaft ist in der Figur 1 dargestellt, daß der Rand 13 in eine Kehle am Umfang des unteren Tragelementes eingelegt und durch einen stählernenRing 14 oder dergleichen gehalten ist. Zur Entkopplung von Schwingungen mit kleinen Amplituden ist in dem oberen Tragelement 1 zwischen zwei durchbrochenen Platten 15 und 16 eine Membran 17 aus einem elastischen Werkstoff mit einem definierten Spiel angeordnet. Diese Membran 17 kann über Bohrungen 18 bzw. 19 gegen den atmosphärischen Außendruck oder gegen einen Überdruck arbeiten, um optimale Wirkung zu erreichen. Mit größer werdenden Schwingungsamplituden liegt die Membrane 17 an der oberen bzw. an der unteren Platte an, so daß die Flüssigkeit aus der den Arbeitsraum bildenden zentralen Kammer 6 in den Kanal 9 verdrängt wird. Der Strömungswiderstand des Kanals ist geringer als die Beulungssteifigkeit des den unteren großen Arbeitsraum in der Kammer 6 umgebenden Federkörpers 5. Die Flüssigkeit gelangt durch den Kanal 9 in dieäußere Kammer 7, die den Ausgleichsraum bildet und die sich bei der Ausbildung nach der Erfindung zwischen dem schürzenförmigen Ansatz 12 und der Außenseite des Federkörpers 5 befindet. Durch die Steifigkeit des Materials des Federkörpers 5 sowie durch den Widerstand des Kanals 9 ergibt sich bei steigender Frequenz ein größer werdender Verlustwinkel. Wird die Beulungssteifigkeit des Materials des Federkörpers 5 jedoch kleiner als der Widerstand des Strömungskanals, nimmt die Dämpfung ab und geht allmählich bei höheren Frequenzen nahezu auf die spezifische Dämpfung des Materials des Federkörpers 5 über.

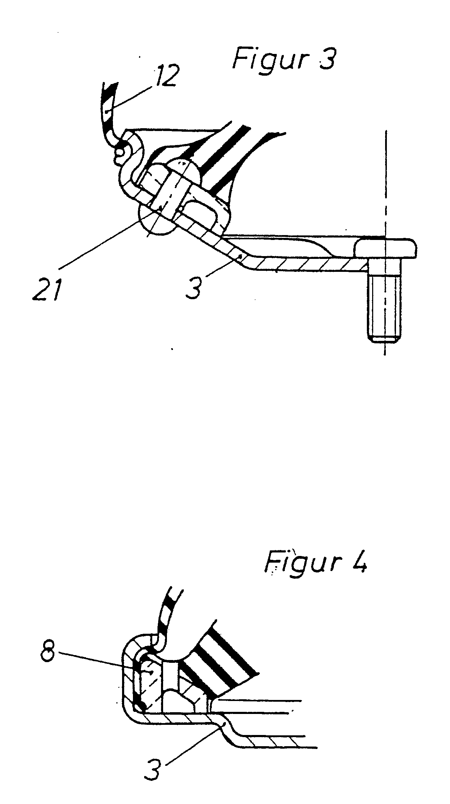

Wie aus den Ausführungsbeispielen in den Figuren 1 und 2 ersichtlich, ist der Federkörper 5 mit dem schürzenförmigen Ansatz 12 einstückig ausgebildet und sowohl mit dem oberen Tragelement 1 als auch mit dem Stützring 8 durch Anvulkanisieren fest verbunden. Dieser Vulkanisationsvorgang erfolgt in einem Arbeitsgang, so daß neben einer verringerten Zahl von Bauteilen gegenüber bekannten Ausführungen auch eine Verringerung des Herstellungsaufwandes erreicht wird.Die Verbindung des Stützringes 8 mit dem unteren Tragelement 3 erfolgt nach dem Beispiel der Figuren 1 und 2 mittels Schrauben 20. Diese Verbindung kann jedoch auch durch eine Nietverbindung 21 (Figur 3) ersetzt werden. Das Ausführungsbeispiel in Figur 4 zeigt die Verbindung der einzelnen Bauelemente des Zweikammer-Stützlagers durch Bördelung. Dargestellt ist die Ausbildung des unteren Tragelementes 3 mit einem verbreiterten Rand, der um den Stützring 8 unter Einschluß des Randes 13 des schürzenförmigen Ansatzes 12 eingerollt ist. Auch bei dieser Anordnung bildet der Rand 13 des schürzenförmigen Ansatzes 12 die Dichtung zwischen dem unteren Tragelement 3 und dem Stützring 8.

Schließlich ist darauf hinzuweisen, daß das gummielastische Material des schürzenförmigen Ansatzes 12 durch eine metallische Schutzabdeckung 22 gegen mechanische Beschädigungen geschützt werden kann, wobei diese Schutzkappe 22 zwischen dem oberen Tragelement 1 und dem Gehäuse des Motors oder dergleichen eingespannt wird.

## Patentansprüche

1. Zweikammer-Motorstützlager mit hydraulischer Dämpfung, bei dem ein oberes Tragelement (1) und ein unteres Tragelement (3) durch einen kegelstumpfförmigen Federkörper (5) aus einem gummielastischen Werkstoff miteinander verbunden sind und gemeinsam mit dem Federkörper (5) eine mit Flüssigkeit gefüllte innere Kammer (6) einschließen, die durch einen Drosselkanal (9) in einem der Tragelemente mit einer äußeren Kammer (7) in Verbindung steht, die sich ringförmig um die innere Kammer (6) herum erstreckt und eine gummielastische Membranwandung (12) aufweist, die einen gegenüber dem Federkörper (5) geringeren Härtegrad aufweist und die mit dem Federkörper (5) als schürzenartiger Ansatz einstückig ausgebildet ist, dessen Rand (13) außen an einem Tragelement (3) dicht befestigt ist, wobei der Federkörper (5) mit einem Stützelement (8) verbunden ist, dadurch gekennzeichnet, daß der Drosselkanal (9) in der Oberfläche des Stützelements (8) ringförmig ausgebildet und von einem zum unteren Tragelement (3) gehörenden benachbarten Bauteil dichtend abgedeckt ist, so daß der Drosselkanal (9) zwischen dem Stützelement (8) und dem unteren Tragelement (3) ganz eingeschlossen ist.

2. Zweikammer-Motorstützlager nach Anspruch 1,dadurch gekennzeichnet, daß der ringförmige Drosselkanal (9) in dem unteren Tragelement (3) eine in der Ebene der Ausdehnung des Drosselkanals (9) angeordnete Mündung (10) in die innere Kammer (6) und eine aufwärts gerichtete Mündung (11) in die äußere Kammer (7) aufweist.

3. Zweikammer-Motorstützlager nach Anspruch 2, dadurch gekennzeichnet, daß in dem ringförmigen Kanal (9) zwischen den beiden Mündungen (10,11) in die beiden Kammern (6,7) ein Sperrglied eingesetzt ist, welches den Kanalquerschnitt ganz oder teilweise abgesperrt.

## Claims

1. A double-chamber engine support bearing with hydraulic damping, in which an upper bearing element (1) and a lower bearing element (3) are connected with one another by a frustum-shaped resilient element (5) made of a rubber-elastic material and together with the resilient element (5) enclose an inner chamber (6) filled with fluid and connected by a throttle duct (9) in one of the bearing elements with an outer chamber (7), which extends in the shape of a ring around the inner chamber (6) and comprises a rubber-elastic diaphragm wall (12), which has a lower degree of hardness than the resilient element (5) and is integrally formed with the resilient element (5) as an apron-like extension, whose edge (13) is secured in a sealing-tight manner to the outside of one bearing element (3), the resilient element (5) being connected with a support element (8), characterised in that the throttle duct (9) is formed in the shape of a ring in the surface of the support element (8) and is covered in a sealing-tight manner by an adjacent component belonging to the lower bearing element (3), so that the throttle duct (9) is fully enclosed between the support element (8) and the lower bearing element (3).

2. A double-chamber engine support bearing according to claim 1, characterised in that the annular throttle duct (9) in the lower bearing element (3) comprises an opening (10) arranged in the plane of the extension of the throttle duct (9) and opening into the inner chamber (6) and an upwardly pointing opening (11) into the outer chamber (7).

3. A double-chamber engine support bearing according to claim 2, characterised in that a blocking member, which fully or partially blocks the duct cross section, is inserted in the annular duct (9) between the two openings (10, 11) into the two chambers (6, 7).

## Revendications

1. Palier de support de moteur à deux compartiments avec amortissement hydraulique, dans lequel un élément porteur supérieur (1) et un élément porteur inférieur (3) sont mutuellement reliés par un corps élastique tronconique (5) en matériau du type caoutchouc, et incluent conjointement avec le corps élastique (5) un compartiment intérieur (6) qui est rempli de liquide et qui communique, par un canal d'étranglement (9) dans un des éléments porteurs, avec un compartiment extérieur (7) s'étendant annulairement tout autour du compartiment intérieur (6) et présentant une paroi (12) en membrane élastique d'un degré de dureté inférieur à celui du corps élastique (5) et réalisée en une pièce avec le corps élastique (5), comme appendice du genre jupe dont le bord (13) est fixé extérieurement de manière hermétique sur un élément porteur (3), le corps élastique (5) étant assemblé à un élément de soutien (8), caractérisé en ce que le canal d'étranglement (9) est configuré annulairement dans la surface de l'élément de soutien (8) et est recouvert hermétiquement par une partie constructive voisine faisant partie de l'élément porteur inférieur (3), de sorte que le canal d'étranglement (9) est totalement inclus entre l'élément de soutien (8) et l'élément porteur inférieur (3).

2. Palier de support de moteur à deux compartiments selon la revendication 1, caractérisé en ce que le canal d'étranglement annulaire (9), qui se trouve dans l'élément porteur inférieur (3), présente une embouchure (10) vers le compartiment intérieur (6) qui est disposée dans le plan de développement du canal d'étranglement (9), et une embouchure (11) vers le compartiment extérieur (7) qui est tournée vers le haut.

3. Palier de support de moteur à deux compartiments selon la revendication 2, caractérisé en ce qu'un organe de fermeture est monté dans le canal annulaire (9), entre les deux embouchures (10,11) vers les deux compartiments (6,7), organe qui ferme totalement ou partiellement la section du canal.

Figur 1

Figur 2

Figur 3

12

21

3

Figur 4

8

3